## Europäisches Patentamt

## European Patent Office

## Office européen des brevets

(11) Veröffentlichungsnummer: **0 162 999**

**B1**

(12) # EUROPÄISCHE PATENTSCHRIFT

(45) Veröffentlichungstag der Patentschrift:
**20.07.88**

(51) Int. Cl.⁴: **G 11 B 23/023**

(21) Anmeldenummer: **84890097.3**

(22) Anmeldetag: **29.05.84**

(54) Behälter für Magnetbandkassetten od. dgl.

(43) Veröffentlichungstag der Anmeldung:
**04.12.85 Patentblatt 85/49**

(45) Bekanntmachung des Hinweises auf die Patenterteilung:
**20.07.88 Patentblatt 88/29**

(84) Benannte Vertragsstaaten:
**AT BE CH DE FR GB IT LI NL SE**

(56) Entgegenhaltungen:
**EP-A-0 085 911**
**DE-A-2 335 965**
**DE-A-2 820 606**
**FR-A-2 381 633**
**FR-A-2 401 783**
**GB-A-2 050 812**
**US-A-3 556 620**
**US-A-4 289 235**

(73) Patentinhaber: **Ernst Stadelmann Gesellschaft m.b.H., Bahnhofstrasse 8, A-4070 Eferding (AT)**

(72) Erfinder: **Kirchner, Balthasar, Bahnhofstrasse 8, A-4070 Eferding (AT)**
Erfinder: **Schleicher, Siegfried, Bahnhofstrasse 8, A-4070 Eferding (AT)**

(74) Vertreter: **Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

EP 0 162 999 B1

## Beschreibung

Die Erfindung bezieht sich auf einen Behälter für Magnetbandkassetten od. dgl., mit mehreren aus Führungen an einander gegenüberliegenden Seiten- bzw. Zwischenwänden bestehenden Aufnahmen zum Einschieben der Kassetten.

Magnetbandkassetten werden nicht nur als Ton- und Musikkassetten verwendet, sondern dienen in immer größerem Umfang zur Datenspeicherung in der Steuerungs- und Computertechnik. Da die Magnetbänder sehr empfindliche Aufzeichnungsträger sind, gibt es zur Aufbewahrung und auch zur Handhabung der Kassetten spezielle Behälter und die meisten dieser Behälter sind Klappschachteln zur Aufnahme jeweils nur einer Kassette, was ein geordnetes Speichern mehrerer Kassetten ausschließt. Es wurde zwar auch vorgeschlagen, die Einzelbehälter durch Schiebe- oder Steckverbindungen zu größeren Einheiten zusammenzufassen, doch bleibt dadurch das systematische Speichern mehrerer Kassetten ebenfalls umständlich und vor allem auch unübersichtlich. Besonders für Musikkassetten sind darüber hinaus auch schon Behälter mit mehreren aneinandergereihten Kassettenaufnahmen bekannt, welche Aufnahmen durch geradverlaufende parallele Rippen und Leisten als Fürungen zum Einschieben der Kassetten entstehen. Hier bleibt allerdings nur der für eine Beschriftung oder Kennzeichnung ungeeignete Kassettenrücken sichtbar, so daß eine schnelle Orientierung über den Behälterinhalt oder ein rasches Wiederauffinden bestimmter Kassetten unmöglich ist. Auch das Entnehmen der einzelnen Kassetten wird durch die enge starre Aneinanderreihung in den Aufnahmen recht mühsam und verlangt das Ergreifen der Kassetten allein mit den Fingerspitzen.

Der Erfindung liegt daher die Aufgabe zugrunde, diese Mängel zu beseitigen und einen Behälter der eingangs geschilderten Art zu schaffen, der sich bei einfachem Aufbau durch seinen hohen Entnahme- und Bedienungskomfort auszeichnet und auch bei Aufnahme einer größeren Anzahl von Kassetten mit wenigen Griffen ein schnelles und systematisches Ordnen und Suchen der Kassetten erlaubt.

Die Erfindung löst diese Aufgabe dadurch, daß die Aufnahmen für die sich im Bereich des Behälterbodens auf seitlichen Auflagern abstützenden Kassetten ein Kipplager bilden, wobei die Führungen mit einer an die Kassettenstärke angepaßten Engstelle die Kippachse bestimmen und mit entsprechenden Anschlägen die Kippweite begrenzen. Die in die Aufnahmen eingeschobenen Kassetten können daher quer zur Einschubrichtung um eine Kassettenlängsachse gekippt werden, so daß sich die in den Behälter eingeordneten Kassetten ähnlich einer Blockkartei handhaben lassen. Es ist möglich, die Kassetten der Reihe nach durchzublättern, wobei jeweils die Vorderseite mit der entsprechenden Aufschrift erkennbar wird, und das Auffinden einer bestimmten Kassette bereitet demnach keine Mühen mehr. Das Kippen der Kassetten erlaubt darüber hinaus auch ein bequemes Entnehmen der gesuchten Kassette, da die an der Fundstelle aufgeklappte Kassettenreihe genügend Platz für ein sattes Erfassen einer Kassette bietet. Die seitlichen Auflager halten die Kassette mit Abstand oberhalb des Behälterbodens, was eine Beschädigung des Magnetbandes verhindert, das ja im Bereich des stirnseitigen Fensters zum Ansatz des Magnetkopfes freiliegt. Die mit den Auflagern zusammenwirkenden Führungen müssen dabei, um die gewünschte Kassettenhandhabung zu gewährleisten, lediglich für eine gewisse Halterung der Kassetten im Bereich der Engstelle sorgen und die Anschläge zur Begrenzung des Kippausschlages bilden, wozu an und für sich verschiedenste Ausgestaltungen der Führungen geeignet sind und es keiner aufwendigen, beweglichen Teile bedarf.

Weisen erfindungsgemäß die Auflager eine von einem mittigen Scheitel beidseitig abfallende Stützfläche auf, wird durch diese konvexe oder winkelige Form des Auflagers die Kippbewegung erleichtert und außerdem die Kassette dazu gebracht, daß sie nicht in einer instabilen Mittellage verbleibt, sondern immer in eine stabile Kipplage fällt.

An und für sich könnte die von der Engstelle abhängige Kippachse unmittelbar im Bereich des Auflagers liegen, doch wäre dann der Kippausschlag der Kassetten im oberen Bereich des Behälters recht groß und könnte zu Platzschwierigkeiten führen. Sind hingegen die Engstellen der Führungen mit Abstand oberhalb der Auflager vorgesehen, wird bei gleichem Kippwinkel der Ausschlag an der Oberseite entsprechend kleiner, und es kommt zu verbesserten Platzverhältnissen und auch zu einer bequemeren Handhabung.

In einer günstigen Weiterbildung der Erfindung weisen die Führungen als Anschläge zur Engstelle symmetrisch auseinanderlaufende Führungsflächen auf. Diese Führungsflächen bieten den Kassetten eine satte Anlage in den Kippstellungen und erleichtern auch das Einschieben der Kassetten, da sie eine gleichmäßig zur Engstelle hin führende Gleitfläche bilden.

In einer besonders vorteilhaften Ausgestaltung der Erfindung sind die Führungen im Eingangsbereich jeder Aufahme durch Querstege bis auf einen mittigen Durchtrittsspalt für einen seitlichen Führungsansatz der Kassetten abgeschlossen, wobei die den Durchtrittsspalt bildenden Enden der Querstege in Einschubrichtung abgewinkelt sein können. Da die meisten Kassetten einen seitlichen Führungsansatz aufweisen, wird durch die auf diese Führungsansätze abgestimmten Querstege ein ungewolltes Herausfallen der Kassetten aus den Aufnahmen verhindert, da die gekippten

Kassetten mit den Führungsansätzen die Querstege hintergreifen und aus den Führungen nicht mehr herausfallen oder herausgezogen werden können. Nur in der Mittellage, wenn die Führungsansatze mit den Durchtrittsspalten fluchten, ist das Entnehmen der Kassetten möglich, so daß es zum gewünschten Schutz vor einem unbeabsichtigten Herausfallen kommt.

In Weiterbildung der Erfindung sind die einer Behälterwand zugeordneten Führungen und Auflager zu einer vorfertigbaren Baueinheit zusammengefaßt. Durch diese voneinander getrennte Fertigung von Behälter und Führungen bzw. Auflagern wird eine wesentliche Vereinfachung der Herstellung erreicht, wozu noch kommt, daß durch die vorgefertigten Baueinheiten auch ein nachträgliches Ausrüsten von Behältern mit den Kassettenaufnahmen möglich ist.

In der Zeichnung ist der Erfindungsgegenstand schematisch in einem Ausführungsbeispiel dargestellt, und zwar zeigen

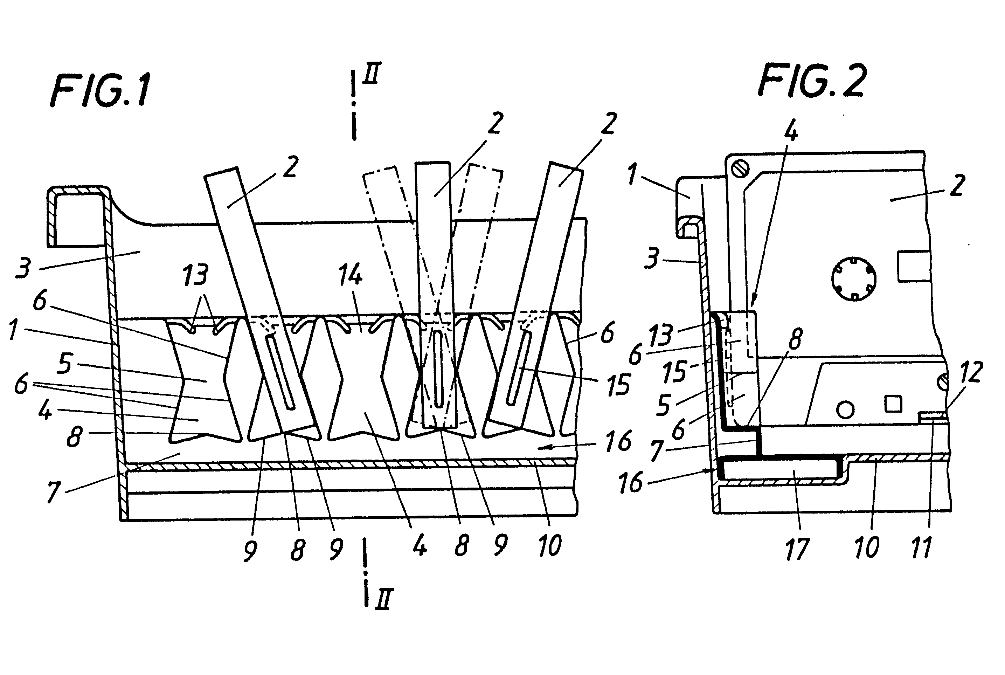

Fig. 1 einen erfindungsgemäßen Behälter im Längsschnitt und

Fig. 2 einen Querschnitt nach der Linie II-II der Fig. 1.

Ein Behälter 1, dessen nicht weiter dargestellter Deckel abgenommen ist, weist zur Aufnahme mehrerer Kassetten 2 entlang der einander gegenüber liegenden Seitenwände 3 Führungen 4 auf, in die sich die Kassetten 2 von oben einschieben lassen. Die Führungen 4 bilden eine Engstelle 5, deren Weite an die Kassettenstärke angepaßt ist, und von dieser Engstelle 5 auseinanderlaufende Führungsflächen 6, so daß für die Kassetten 2 ein Kipplager entsteht. Die eingeschobenen Kassetten 2 stützen sich bodenwärts auf seitlichen Auflagern 7 ab, die eine von einem mittigen Scheitel 8 beidseits abfallende Stützfläche 9 aufweisen.

Die Kassetten 2 können daher in den Führungen 4 vor- und zurückgekippt werden, wobei die Engstelle 5 die Kippachse bestimmt und die Führungsflächen 6 als Anschläge zur Begrenzung des Kippwinkels dienen, so daß die in den Behälter 1 eingeordneten Kassetten 2 eine Handhabung ähnlich einer Blockkartei erlauben. Die Auflager 7 erleichtern die Kippbewegung und verhindern durch ihre Kassettenabstützung mit Abstand oberhalb des Kassettenbodens 10 auch eine Beschädigung des im Bereich des offenen Kassettenfensters 11 freiliegenden Magnetbandes 12 auf Grund einer direkten Berührung des Behälterbodens 10 beim Kippen.

Um einem ungewollten Herausfallen der Kassetten 2 aus den Führungen 4 vorzubeugen, sind im Eingangsbereich der Führungen 4 Querstege 13 vorgesehen, die die Führungen bis auf einen mittigen Durchtrittsspalt 14 für einen seitlichen Führungsansatz 15 der Kassetten 2 abschließen. Die Enden der Querstege 13 sind in Einschubrichtung abgewinkelt, so daß sie bei gekippter Kassette 2 die Führungsansätze 15 übergreifen und ein Herausfallen der Kassetten 2 unmöglich machen. Nur in Mittellage der Kassetten 2, in der die Führungsansätze 15 durch die Durchtrittsspalte 14 passen, lassen sich daher die Kassetten 2 dem Behälter 1 entnehmen.

Zur Vereinfachung der Herstellung sind die Führungen 4 und die Auflager 7 einer Seite zu einer vorfertigbaren Baueinheit 16 zusammengefaßt, die in einer der Seitenwand 3 des Behälters 1 entlanglaufenden Bodenvertiefung 17 sitzt. Für die Herstellung der Teile aus Kunststoff ergeben sich dadurch wesentlich einfachere Voraussetzungen zur Gestaltung der Werkzeuge.

**Patentansprüche**

1. Behälter für Magnetbandkassetten od. dgl., mit mehreren aus Führungen (4) an einander gegenüberliegenden Seiten- bzw. Zwischenwänden (3) bestehenden Aufnahmen zum Einschieben der Kassetten (2), dadurch gekennzeichnet, daß die Aufnahmen für die sich im Bereich des Behälterbodens (10) auf seitlichen Auflagern (7) abstützenden Kassetten (2) ein Kipplager bilden, wobei die Führungen (4) mit einer an die Kassettenstärke angepaßten Engstelle (5) die Kippachse bestimmen und mit entsprechenden Anschlägen (6) die Kippweite begrenzen.

2. Behälter nach Anspruch 1, dadurch gekennzeichnet, daß die Auflager (7) eine von einem mittigen Scheitel (8) beidseitig abfallende Stützfläche (9) aufweisen.

3. Behälter nach Anspruch 1 oder 2, dadurch gekennzeichnet, daß die Engstellen (5) der Führungen (4) mit Abstand oberhalb der Auflager (7) vorgesehen sind.

4. Behälter nach Anspruch 3, dadurch gekennzeichnet, daß die Führungen (4) als Anschläge zur Engstelle (5) symmetrisch auseinanderlaufende Führungsflächen (6) aufweisen.

5. Behälter nach einem der Ansprüche 1 bis 4, dadurch gekennzeichnet, daß die Führungen (4) im Eingangsbereich jeder Aufnahme durch Querstege (13) bis auf einen mittigen Durchtrittsspalt (14) für einen seitlichen Führungsansatz (15) der Kassetten (2) abgeschlossen sind.

6. Behälter nach Anspruch 5, dadurch gekennzeichnet, daß die den Durchtrittsspalt (14) bildenden Enden der Querstege (13) in Einschubrichtung angewinkelt sind.

7. Behälter nach einem der Ansprüche 1 bis 6, dadurch gekennzeihnet, daß die einer Behälterwand (3) zugeordneten Führungen (4) und Auflager (7) zu einer vorfertigbaren Baueinheit (16) zusammengefaßt sind.

## Claims

1. A container for magnetic tape cassettes or the like comprising a plurality of receptacles for slidably receiving the cassettes (2), which receptacles consist of tracks (4) on mutually opposite side walls and partitions (3), characterized in that the receptacles constitute a fulcrum for the cassettes (2), which are supported on lateral supports (7) adjacent to the bottom (10) of the container, and the tracks (4) define a throat (5), which conforms to the thickness of the cassette and determines the fulcrum axis, and are provided with corresponding stops (6) for limiting the extent of the tilting movement.

2. A container according to claim 1, characterized in that the supports (7) have a supporting surface (9), which slopes on both sides from a central apex (8).

3. A container according to claim 1 or 2, characterized in that the throats (5) of the tracks (4) are spaced above the supports (7).

4. A container according to claim 3, characterized in that the tracks (4) are provided with stops consisting of guiding surfaces (6), which symmetrically diverge towards the throat (5).

5. A container according to any of claims 1 to 4, characterized in that the tracks are closed (4) at the entrance portion of each reeptacle by transverse webs (13) except for a central passage gap (14) for a lateral guiding extension (15) of the cassettes (2).

6. A container according to claim 5, characterized in that those ends of the transverse webs (13) which define the passage gap (14) are angled in the direction in which the cassettes are slidably inserted.

7. A container according to any of claims 1 to 6, characterized in that the tracks (4) and supports (7) which are associated with a container wall (3) are combined in a unit of construction (16), which can be prefabricated.

## Revendications

1. Récipient pour cassettes de bandes magnétiques ou équivalents, comprenant plusieurs alvéoles d'insertion des cassettes (2) qui sont composés de guides (4) prévus sur des parois latérales ou intermédiaires (3) mutuellement opposées, caractérisé par le fait que les alvéoles destinés à recevoir les cassettes (2) qui prennent appui sur des appuis latéraux (7) dans la région du fond (10) du récipient, forment un support à bascule, les guides (4) déterminant l'axe de basculement au moyen d'un étranglement (5) adapté à l'épaisseur de la cassette et limitant l'amplitude du basculement au moyen de butées (6).

2. Récipient selon la revendication 1, caractérisé par le fait que les appuis (7) présentent une surface d'appui (9) fui est en pente descendante des deux côtés à partir d'un sommet central (8).

3. Récipient selon la revendication 1 ou 2, caractérisé par le fait que les étranglements (5) des guides (7) sont placés à une certaine distance au-dessus des appuis (7).

4. Récipient selon la revendication 3, caractérisé par le fait que les guides (4) présentent, comme butées, des surfaces de guidage (6) qui divergent symétriquement par rapport à l'étranglement (5).

5. Récipient selon une des revendications 1 à 4, caractérisé par le fait que les guides (4) sont fermés dans la région d'entrée de chaque alvéole par des pattes transversales (13), à l'exception d'une fente de passage centrale (14) qui donne passage à une salllie de guidage latérale (15) des cassettes (2).

6. Récipient selon la revendication 5, caractérisé par le fait que les extrémités des pattes transversables (13) qui forment la fente de passage (14) sont rabattues dans le sens de l'insertion.

7. Récipient selon une des revendication 1 à 6, caractérisé par le fait que les guides (4) associés à une paroi (3) du récipient et les appuis (7) sont réunis pour former une unité (16) pouvant être pré-fabriquée.

0 162 999

FIG.1

FIG.2